# EUROPEAN PATENT APPLICATION

(11) **EP 4 600 836 A1**
(43) Date of publication of application: **13.08.2025**
(21) Application number: 23887636.1
(22) Date of filing: 11.09.2023
(51) Int. Cl.: G06F 13/40, G06F 13/42, G06F 13/38

(54) **PCIE DEVICE MANAGEMENT METHOD, DEVICE AND SERVER**

(30) Priority: 08.11.2022 CN 202211392638
(71) Applicant: xFusion Digital Technologies Co., Ltd., Zhengzhou, Henan 450046 (CN)
(72) Inventor: XU, Wei, Zhengzhou, Henan 450046 (CN)
(74) Representative: MERH-IP Matias Erny Reichl Hoffmann Patentanwälte PartG mbB
(86) International application number: PCT/CN2023/118097
(87) International publication number: WO 2024/098942

(57) **Abstract**

Embodiments of the present application provide a PCIe device management method, a PCIe device management device, and a server, belonging to the field of system design technology. The embodiments of the present application enable live migration of PCIe devices across different hardware platforms and enhance the utilization of PCIe devices. The method includes: receiving, by the hot-swap control module, a resource release instruction, where the resource release instruction is configured to instruct to release resources of a first PCIe device mounted on a first server; based on the resource release instruction, controling, by the hot-swap control module, the transfer module to perform a hot-unplug operation with the first server; and controling, by the hot-swap control module, the PCIe configuration module to release the resources of the first PCIe device, where resource release is configured to represent a termination of a correspondence between the first PCIe device and the first server.

## Description

This application claims priority to Chinese Patent Application No. 202211392638.5, filed with the China National Intellectual Property Administration on November 08, 2022, entitled "PCIE DEVICE MANAGEMENT METHOD, DEVICE, AND SERVER", which is incorporated herein by reference in its entirety.

### TECHNICAL FIELD

The present application relates to the field of system design technology, and in particular, to a PCIe device management method, a PCIe device management device, and a server.

### BACKGROUND

With the development of peripheral component interconnect standard (peripheral component interconnect express, PCIe) devices toward high performance, high power consumption and intelligence, dependence of the PCIe devices on servers is gradually reduced, the cost is gradually increased, so it is necessary to make full use of PCIe devices.

Currently, in the server, the PCIe device can be assigned to the hard partition on the server corresponding to the slot of the PCIe device by means of hardware partitioning. After the slots of the PCIe devices are allocated to these hardware partitions, resource sharing of the PCIe devices across different servers becomes impossible, resulting in underutilization of the PCIe devices.

### SUMMARY

Embodiments of the present application provide a PCIe device management method, a PCIe device management device, and a server, which can realize live migration of PCIe devices across different servers, achieving resource sharing of PCIe devices among different servers, and enhancing the utilization of PCIe devices.

According to a first aspect, the present application provides a PCIe device management method, which is applied to a management device. The management device includes a transfer module, a hot-swap control module, and a PCIe configuration module. The method includes: receiving, by the hot-swap control module, a resource release instruction, where the resource release instruction is configured to instruct to release resources of a first PCIe device mounted on a first server; based on the resource release instruction, controling, by the hot-swap control module, the transfer module to perform a hot-unplug operation with the first server; and controlling, by the hot-swap control module, the PCIe configuration module to release the resources of the first PCIe device, where resource release is configured to represent a termination of a mapping between the first PCIe device and the first server.

It can be understood that the management device can control the hot-unplug operation of the transfer module and the first server according to the resource release instruction received by the hot-swap control module, and then cause the termination of the correspondence between the first PCIe device and the first server, so that the PCIe configuration module in the management device can release the resources of the first PCIe device. Since the first PCIe device can be allocated and mounted on the first server, by terminating the correspondence between the first PCIe device and the first server, the first PCIe device is released, so that the previously allocated and mounted PCIe device on the server can be unmounted, avoiding the limitations on PCIe device utilization, thus improving the utilization of the PCIe device.

In a possible implementation, after the hot-swap control module controls the PCIe configuration module to release the resources of the first PCIe device, the method further includes: the hot-swap control module receiving a resource allocation instruction, and the resource allocation instruction being configured to instruct the first PCIe device after resource release to be mounted to the second server. Based on the resource allocation instruction, the hot-swap control module controling the transfer module and the second server to perform a hot-plug operation; the hot-swap control module controling the PCIe configuration module to allocate resources to the first PCIe device, and the resource allocation is configured to represent an establishment of a correspondencebetween the first PCIe device and the second server.

It can be understood that after the first PCIe device is released, the resource allocation instruction can be issued to the hot-swap control module to control the transfer module and the second server specified in the resource allocation instruction to perform a hot insertion operation. Subsequently, the PCIe configuration module is controled to reallocate the first PCIe device by establishing the correspondence between the first PCIe device and the second server. This approach avoids confining the PCIe device to the hardware platform corresponding to a single server and enables live migration of the PCIe device across different server hardware platforms through reallocating the PCIe device, thereby enhancing the utilization of the PCIe device.

In a possible implementation, the management device also includes a management software module, and the hot-swap control module controls the PCIe configuration module to release the resources of the first PCIe device. The method includes: the hot-swap control module notifying the management software module that the first server has been hot unplugged. The management software module terminating the correspondence between the first PCIe device and the first server in the PCIe configuration module.

It can be understood that the management device also includes the management software module. After the hot-swap control module directs the transfer module and the first server to perform the hot-unplug operation, the management software module can be informed. Then, the management software module can terminate the correspondence between the first PCIe device and the first server. Through the management software module, coordination between the hot-swap control module and the PCIe configuration module is achieved to terminate the correspondence between the first PCIe device and the first server, thereby improving the efficiency of resource release for the PCIe device.

In a possible implementation, the PCIe configuration module includes a correspondence between at least one PCIe device connected to the management device and at least one server connected to the transfer module.

It can be understood that the PCIe configuration module can include the correspondence between the PCIe device and the server. The management device can mount the PCIe devices to run on the corresponding servers according to the correspondence, enabling the PCIe configuration module to allocate the PCIe devices to the corresponding servers for mounting and operation based on the correspondence, thereby facilitating dynamic partition management of the PCIe devices by the PCIe configuration module.

In a possible implementation, after the correspondence between the first PCIe device and the first server is terminated, the first PCIe device is in an idle state. The idle state is configured to indicate that the mount is not running on the server and that the state assigned to the server is supported.

It can be understood that after the hot-unplug interaction between the management device and the first server, the correspondence between the first PCIe device and the first server is terminated, which means that the first server releases the first PCIe device. The released first PCIe device can be marked as idle, allowing the management device to reallocate the first PCIe device marked as idle to other servers, thereby improving the utilization of the first PCIe device.

In a possible implementation, In the case of hot swap control module control transfer module and the first server hot pull out, a slot of the first PCIe device remains powered on.

It can be understood that in the case of hot-unplug interaction between the management device and the first server, the normal power on slot of the first PCIe device will not be affected, the release of the first PCIe device from the first server can be achieved simply via modification to the correspondence. This avoids an impact on an operation of the first PCIe device when the first PCIe device is switched and allocated, ensuring its independent operation remains unaffected.

In a possible implementation, the management device also includes a power supply module, and the method further includes: supplying, by the power supply module, power to the first PCIe device.

It can be understood that the management device can supply power to each running PCIe devices connected to the management device, avoiding coupling issues between the PCIe devices and the servers. Since the management device supplies power to the PCIe device independently, therefore, it avoids compatibility issues resulting from the power consumption caused by the server powering the PCIe devices, thereby improving the efficiency of integrating the PCIe devices into the servers.

In a possible implementation, the management device also includes a heat dissipation module, and the method further includes: dissipating, by the heat dissipation module, heat from the first PCIe device.

It can be understood that the management device can provide heat dissipation to each running PCIe devices connected to the management device, avoiding coupling issues between the PCIe devices and the servers. Since the management device provides an independent heat dissipation for the PCIe devices, the management device avoids compatibility issues resulting from the power consumption and heat dissipation conflicts caused by the heat dissipation from the servers to the PCIe devices, thereby improving the efficiency of integrating the PCIe devices into the servers.

According to a second aspect, the present application provides another PCIe device management method, which is applied to a management device. The management device includes a transfer module, a hot-swap control module, and a PCIe configuration module. The method includes: receiving, by the hot-swap control module, a resource allocation instruction, where the resource allocation instruction is used to instruct to mount a second PCIe device to a second server. The PCIe configuration module does not include a correspondence of the second PCIe device. Based on the resource allocation instruction, the hot-swap control module controls the transfer module and the second server to perform a hot insertion operation. The hot-swap control module controls the PCIe configuration module to allocate resources of the second PCIe device, and the resource allocation is used to represent an establishment of a correspondence between the second PCIe device and the second server.

It can be understood that the management device, according to the resource allocation instruction received by the hot-swap control module, controls the transfer module and the second server to perform a hot-plug operation, and then causes the establishment of the correspondence between the second PCIe device and the second server, allowing the PCIe configuration module in the management device to allocate the resources of the second PCIe device. The method avoids the limitations on PCIe device utilization, facilitates reallocation of the PCIe device, and improves the utilization of the PCIe device.

According to a third aspect, the present application provides a PCIe device management apparatus. The PCIe management apparatus is configured to perform any one of the PCIe device management methods provided in the first aspect and the second aspect.

In a possible implementation, the present application can divide the PCIe device management apparatus into functional modules based on the methods provided in the first and second aspects. For example, individual functional modules can be divided according to their respective functions, or two or more functions can be integrated into a single processing module. By way of example, the present application can divide the PCIe device management apparatus into modules such as the transfer module, the hot-swap control module, and the PCIe configuration module according to their functions. Descriptions of possible technical solutions performed by the functional modules divided above and their beneficial effects can refer to the technical solutions provided in the first aspect, the second aspect, or the technical solution provided by its corresponding possible implementation, and will not be repeated here.

According to a fourth aspect, the embodiments of the present application provide a computing device, which includes a processor and a memory. The memory is configured to store a computer program instruction. The computer program instruction is loaded and executed by the processor to enable the computing device to implement the PCIe device management methods described in the above aspects.

According to a fifth aspect, the embodiments of the present application provide a computer-readable storage medium, which stores at least one computer program instruction. The computer program instruction is loaded and executed by the processor to implement the PCIe device management methods described in the above aspects.

According to a sixth aspect, the embodiments of the present application provide a computer program product. The computer program product includes a computer instruction stored in the computer-readable storage medium. The processor of the computing device reads the computer instruction from the computer-readable storage medium. The processor executes the computer instruction, enabling the computing device to perform the PCIe device management methods provided in any of the optional implementations of the above aspects.

According to a seventh aspect, the embodiments of the present application provide a server. The server is connected to at least one PCIe device through the management device.

For detailed description of the third to seventh aspects and their implementations in the present application, reference can be made to the detailed description in the first aspect and its implementations or the second aspect and its implementations. Additionally, for the beneficial effects of the third to seventh aspects and their implementations, reference can be made to the analysis of the beneficial effects in the first aspect and its implementations or the second aspect and its implementations. The details will not be repeated here.

These or other aspects of the present application will become more apparent and easy-to-understand in the following description.

### BRIEF DESCRIPTION OF DRAWINGS

FIG. 1 is a structural diagram of a PCIe device management system according to an embodiment of the present application;
FIG. 2 is a flowchart of a PCIe device management method according to an embodiment of the present application;
FIG. 3 is a schematic flowchart of a PCIe device release process according to the embodiment shown in FIG. 2;
FIG. 4 is a schematic flowchart of a PCIe device allocation process according to the embodiment shown in FIG. 2;
FIG. 5 is a schematic flowchart of a PCIe device allocation process according to the embodiment shown in FIG. 2;
FIG. 6 is a structural diagram of a PCIe device management apparatus according to an embodiment of the present application; and
FIG. 7 is a structural diagram of a computing device according to an embodiment of the present application.

### DESCRIPTION OF EMBODIMENTS

In the embodiments of the present application, words such as "exemplary" or "for example" are used to indicate an example, an illustration, or a description. Any embodiment or design described as "exemplary" or "for example" in the embodiments of the present application should not be construed as being more preferred or advantageous over other embodiments or designs. Rather, the use of the words "exemplary" or "for example" is intended to present related concepts in a concrete way.

In the embodiments of the present application, the terms "first" and "second" are used only for descriptive purposes, and should not be interpreted as indicating or implying related importance or implicitly specifying the quantity of the technical features indicated. Thus, features defined by "first" and "second" may explicitly or implicitly include one or more of such features. In the descriptions of the present application, unless otherwise stated, "a plurality of" represents two or more.

First, some concepts involved in the PCIe device management method and the computing device provided in the embodiments of the present application are explained:
PCIe device: a hardware device connected via a slot on a PCIe bus. PCIe devices may include network interface card, graphics processing unit (Graphics Processing Unit, GPU), sound card, graphics card, etc. PCIe devices may also be intelligent hardware devices with independent operating system, such as intelligent NIC and intelligent GPU.

PCIe is a bus interface, and the PCIe interface is hot-swappable. PCIe devices can be inserted into the PCIe slot.

Hot plug technology (Hot swap) : a technology that allows replacing or removing connected components without shutting down the system or cutting off the power supply.

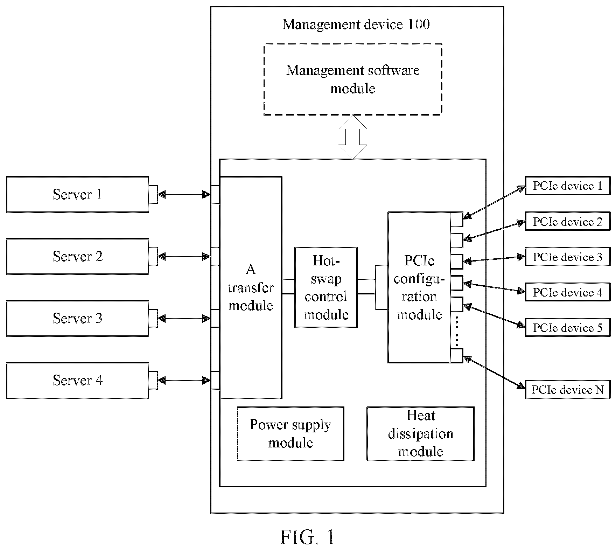

As shown in FIG. 1, FIG. 1 is a structural diagram illustrating a PCIe device management system according to an embodiment of the present application. The PCIe device management system may include at least one server, a management device 100 connected to the at least one server, and at least one PCIe device connected to the management device 100.

The management device 100 can be a computing device and can include a PCIe configuration module, a hot-swap control module, a transfer module, a power supply module, and a heat dissipation module. In addition, a management software module can be run in the management device 100 for controling and managing each module in the management device 100.

Optionally, the at least one server can be connected to the management device 100 via the transfer module in the management device 100.

In a possible implementation, the at least one server may communicate with the management device 100 through the standard communication protocol, or the at least one server may communicate with the management device 100 through a wired connection using a connection line.

The transfer module may be a component of the management device 100 configured to provide external interfaces. The transfer module can enable communication between the at least one external server and the management device. The transfer module can be implemented as an adapter board.

Optionally, one end of the hot-swap control module can be connected to the transfer module, and the other end can be connected to the PCIe configuration module. The PCIe configuration module may be implemented as a PCIe Switch. The PCIe Switch may be implemented as a chip for expanding connectivity of the PCIe devices and managing the servers allocated to each PCIe device.

The hot-swap control module is configured to trigger and manage hot-swap operations of the PCIe devices, process signals related to hot swap, and thereby supporting the live migration of the PCIe devices.

Optionally, one end of the PCIe Switch may be connected to the hot-swap control module, and the other end is provided with a plurality of slots, each slot being connected to one PCIe device.

The PCIe Switch can be used to expand the slots of the PCIe devices, providing sufficient connection slots for the PCIe devices to be connected, and perform dynamic partition management of each PCIe device on the slots. The dynamic partition management indicates that a partition to which a slot belongs can be dynamically changed. Specifically, based on an instruction from the management software module, the partition corresponding to a slot can be modified. The partition can be used to represent links between the slots and the ports connected to various servers. Slots within a same partition can be connected to a same server via the links, while slots in different partitions can be connected to different servers via the links.

Optionally, the power supply module may be used to provide an independent power supply system for the management device. Specifically, the power supply module can provide independent power to the running PCIe devices. The heat dissipation module may be used to perform unified heat dissipation management of the management device. Specifically, the heat dissipation module can dissipate heat for the running PCIe devices to ensure their normal operation.

In a possible implementation, the management software module can be installed in the management device 100, and the management software module is run by a processor of the management device 100. This management software module can be used as an independent management software to manage the PCIe Switch, control the partitioning of the PCIe devices, and achieve the switching of the PCIe devices across different servers through dynamic partition management.

In addition, the management software module can manage the hot-swap control module, implementing a hot-swap interaction between the servers' operating systems and the management device, and achieving the dynamic hot-swap interaction.

Additionally, the management software module can also manage the power supply module and the heat dissipation module, meeting the power supply and heat dissipation requirements of the PCIe devices.

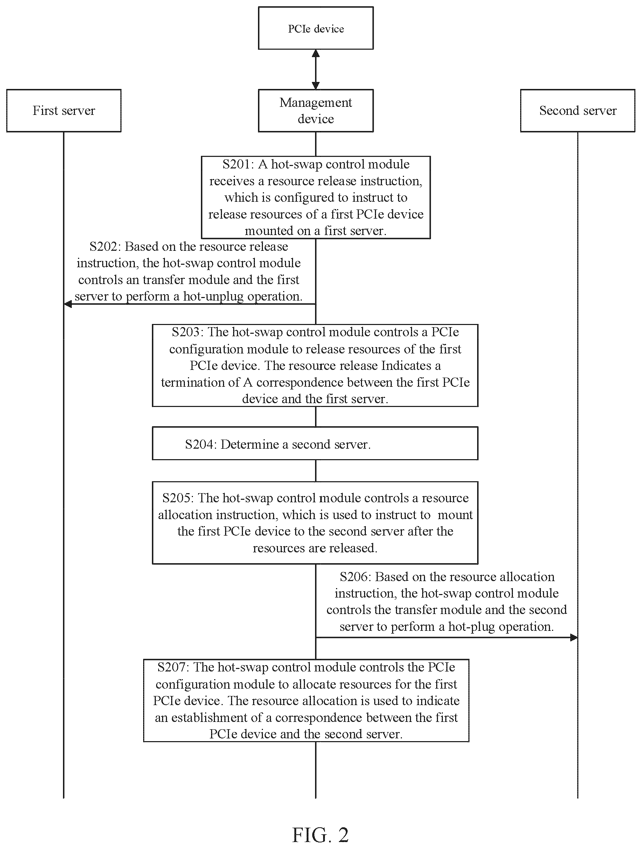

FIG. 2 illustrates a flowchart of a PCIe device management method according to an embodiment of the present application. The PCIe device management method can be applied to a management device, for example, the management device can be the management device 100 shown in FIG. 1. The PCIe device management method includes the following steps:
Step S201: The hot-swap control module receives a resource release instruction, which is configured to instruct to release resources of a first PCIe device mounted on a first server.

In the embodiments of the present application, the management device includes a PCIe configuration module with a plurality of slots for connecting PCIe devices. The management device can be partitioned by the slots, and the PCIe devices connected to the slots in the same partition can be connected to the same server link. This link connection can represent that the PCIe device is electrically connected to the server. When the current PCIe device is mounted and running on the first server, the hot-swap module of the management device can receive a resource release instruction for releasing the resources of the first PCIe device mounted on the first server.

In a possible implementation, the hot-swap control module can receive the resource release instruction issued by the management software module. The management software module is a software used in the management device for coordinating the control of the hot-swap control module, the transfer module, and the PCIe configuration module.

When the management software module receives a trigger for a resource release operation issued by the user, the management software module can issue a resource release instruction to the hot-swap control module. Alternatively, when the first server does not need to mount and run the first PCIe device, the first server sends an instruction to release the first PCIe device to the management device. When the management software module receives the instruction from the first server to release the first PCIe device, sends a resource release instruction to the hot-swap control module.

Step S202: Based on the resource release instruction, the hot-swap control module controls the transfer module to perform a hot-unplug interaction operation with the first server.

In the embodiments of the present application, after receiving the resource release instruction, the hot-swap control module determines the first server specified in the instruction and controls the transfer module and the first server to perform a hot-unplug interaction.

In a possible implementation, the hot-unplug interaction of the transfer module and the first server can be achieved by the transfer module sending a hot-unplug signal to the first server. The operating system (Operating System, OS) of the first server processes the resource release, and returns a slot power-off notification signal to the management device through the transfer module, thereby completing the hot-unplug interaction of the transfer module and the first server.

Step S203: The hot-swap control module controls the PCIe configuration module to release the resources of the first PCIe device. The resource release represents the termination of a correspondence between the first PCIe device and the first server.

In the embodiments of the present application, the hot-swap control module can direct the PCIe configuration module to terminate the correspondence between the first PCIe device and the first server, thus completing the resource release of the first PCIe device.

In a possible implementation, after the management device and the first server performs a hot-unplug interaction, the first server can notify the management device that the first server invalidates the identifier corresponding to the first PCIe device that has been unmounted, so thatthe management device can terminate the correspondence between the first PCIe device corresponding to the identifier and the first server according to the identifier, thus terminating the communication connection between the first PCIe device and the first server.

After the PCIe configuration module terminates the correspondence between the first PCIe device and the first server, the first PCIe device is in an idle state. The idle state can be used to represent that the device is not mounted and running on the server and is available for allocation to the servers.

That is, after the link connection between the first PCIe device and the first server is terminated, the management device can mark the first PCIe device, marking it as idle, to represent that the first PCIe device is not mounted and running on the server, and is in a state that supports allocation to servers.

For example, the PCIe devices that are in an idle state and connected to the management device can form a resource pool, each PCIe device in the pool being a PCIe resource that supports allocation to servers.

In a possible implementation, the management device and the first server perform the hot-unplug interaction and remove correspondences between ports of the first server and slots of the first PCIe device, so as to terminate the correspondence between the first PCIe device and the first server, and disconnect the link between the first PCIe device and the first server.

That is, correspondences between the server ports and the slots of various PCIe devices can be stored in the PCIe configuration module of the management device. Alternatively, the management device can store correspondences between the ports of servers that have already allocated PCIe devices and the slots of the corresponding PCIe devices.

For example, when a PCIe Switch expansion slot 1 in the management device is connected to a PCIe device 1, a slot 2 to a PCIe device 2, a slot 3 to a PCIe device 3, and a slot 4 to a PCIe device 4, and the servers connected to the management device include a server 1 connected via a port 1 on the transfer module, a server 2 connected via a port 2 on the transfer module, and a server 3 connected via a port 3 on the transfer module, then when the PCIe device 1 is mounted on the server 2, a current stored correspondence in the management device is a correspondence between the slot 1 and the port 2. If the management device and the server 2 perform a hot-unplug interaction, this correspondence is removed.

During the hot-unplug interaction of the management device and a second server, slots of the PCIe device remain powered on.

Since the hot-unplug interaction of the management device and the second server does not affect the normal power-on state of the slot of the PCIe device, the release of the PCIe device from the first server can be achieved simply via modification to the correspondence. This avoids an impact on an operation of the PCIe device during allocation switching, ensuring its independent operation remains unaffected.

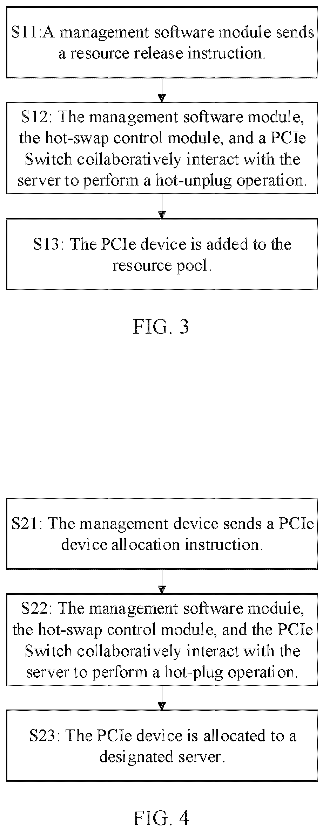

For example, FIG. 3 is a schematic flowchart of a PCIe device release process according to the embodiments of the present application. As shown in FIG. 3, the management device can issue a PCIe device release instruction through the management software module, and the PCIe device release instruction can be a resource release instruction. When the management software module receives a request from the first server to release the mounted first PCIe device, the management software module can send the resource release instruction (S11). This instruction can be sent to the hot-swap control module and the PCIe Switch, which is also the PCIe configuration module, in the management device. The management device, based on the instruction, controls the hot-swap control module and the PCIe Switch to collaboratively perform the hot-unplug interaction with the first server. Specifically, after receiving the resource release instruction, the hot-swap control module controls the transfer module and the first server to perform the hot-unplug interaction. When the PCIe configuration module receives the resource release instruction and receives the response sent by the hot-swap control module, where the response is an indication from the first server that the hot unplugging is completed, and can be a signal to power off, the PCIe configuration module can terminate the correspondence between the first PCIe device and the first server (S12). When the management device and the first server complete the hot-unplug operation, the management device can incorporate the PCIe device into the resource pool for future allocation to other servers for operation. The identity or address identifiers corresponding to the idle PCIe devices connected to the management device can form the resource pool. The PCIe devices corresponding to each identity or address identifier in this resource pool are PCIe resources that can be allocated to the servers. This resource pool can be stored in the storage space of the management device (S13).

Step S204: Determine the second server.

In the embodiments of the present application, when the management device needs to allocate the PCIe device, the management software module can determine the second server to which the PCIe device needs to be allocated.

The management device is communicatively connected to a plurality of servers, and the second server is one of these servers.

In a possible implementation, the second server can be determined by the management device according to the user instruction it receives. Alternatively, the second server can be determined by the PCIe device requirement information sent by the server and received by the management device. The PCIe device requirement information may be details such as the type of the PCIe device that the server currently needs to be allocated, and the management device can determine the PCIe device to be allocated to the server based on the requirement information.

The management device may determine a server indicated by a server identifier included in the received user instruction to be the second server. Alternatively, the management device may determine a server that sends the PCIe device requirement information to be the second server.

For example, when a user instructs that the server 1 needs a PCIe device allocated, the server 1 can be determined to be the second server. Alternatively, when the server 1 requires substantial image processing during operation, the server 1 can send a request to the management device for GPU allocation. After receiving the request for GPU allocation from the server 1, the management device can determine the server 1 to be the second server.

Step S205: The hot-swap control module receives the resource allocation instruction, which is configured to instruct to mount the first PCIe device after resource release to the second server.

In the embodiments of the present application, the hot-swap control module can receive the resource allocation instruction that instructs to mount the first PCIe device after resource release to the second server.

In a possible implementation, after determining the second server, the management software module sends a resource allocation instruction to the hot-swap control module. This instruction can instruct to mount the first PCIe device to the second server.

When the resource allocation instruction, sent by the management software module to the hot-swap control module, indicates that the PCIe device to be allocated to the second server can be either the first PCIe device or the second PCIe device, the first PCIe device can be the one that was previously mounted on the first server after resource release, and the second PCIe device can be the one that was previously not mounted on server.

Step S206: Based on the resource allocation instruction, the hot-swap control module control s the transfer module and the second server to perform a hot-plug operation.

In the embodiments of the present application, after receiving the resource allocation instruction, the hot-swap control module determines the second server and the PCIe device specified in the instruction, and controls the transfer module and the second server to perform a hot-plug interaction.

In a possible implementation, the hot-plug interaction of the transfer module and the second server can be achieved by the transfer module sending a hot-plug signal to the second server, followed by the second server returning a slot power-on notification signal to the management device through the transfer module, thereby completing the hot-plug operation between the transfer module and the first server.

Step S207: The hot-swap control module controls the PCIe configuration module to allocate resources for the first PCIe device. The resource allocation represents an establishment of a correspondence between the first PCIe device and the second server.

In the embodiments of the present application, the management device can establish the correspondence between the second server and the PCIe device by the hot-plug interaction with the first server, enabling the PCIe device to be mounted to run on the second server.

In a possible implementation, a correspondence between the port of the first server and the slot of the PCIe device is determined by the hot-plug interaction with the first server. Based on this correspondence, the PCIe device is mounted and run on the first server.

For example, when the PCIe Switch expansion slot 1 in the management device is connected to the PCIe device 1, the slot 2 to the PCIe device 2, the slot 3 to the PCIe device 3, and the slot 4 to the PCIe device 4, and the servers connected to the management device include the server 1 connected via the port 1 on the transfer module, the server 2 connected via the port 2 on the transfer module, and the server 3 connected via the port 3 on the transfer module, then when the PCIe device 1 is mounted on the server 2, the current stored correspondence in the management device is the correspondence between the slot 1 and the port 2. When the management device and the server 2 perform the hot-unplug interaction, this correspondence is removed. When the server 3 is determined to be the first server, and the PCIe device to be allocated to the first server is the PCIe device connected to the slot 1, the management device and the server 3 perform a hot-plug operation, determining the correspondence between the port 3 and the slot 1, and storing this correspondence in the management device. Based on this relationship, a link connection is established between the port 3 and the slot 1, allowing the PCIe device to be mounted and run on the server 3.

For example, FIG. 4 is a schematic flowchart of a PCIe device allocation process according to the embodiments of the present application. As shown in FIG. 4, the management device can issue a PCIe device allocation instruction through the management software module, and the PCIe device allocation instruction can be a resource allocation instruction. When the management software module determines the second server and receives a request to allocate the first PCIe device to be mounted on the second server, the management software module can send the resource allocation instruction (S21). This instruction can be sent to the hot-swap control module and the PCIe Switch, which is also the PCIe configuration module, in the management device. The management device, based on the instruction, controls the hot-swap control module and the PCIe Switch to collaboratively perform a hot-plug interaction with the second server. Specifically, after receiving the resource allocation instruction, the hot-swap control module controls the transfer module and the second server to perform a hot-plug interaction. After receiving the resource allocation instruction and a response from the hot-swap control module, where the response is an indication from the second server that the hot-plug operation is complete, and can be a signal to power on, the PCIe configuration module can establish the correspondence between the first PCIe device and the second server (S22). When the management device and the second server complete the hot-plug interaction, the management device can allocate the PCIe device to the designated second server, allowing the PCIe device to be mounted and run on the second server (S23).

In a possible implementation, when the PCIe device is running, the management device can supply power to the PCIe device through the power supply module.

In other words, the management device can supply power to the running PCIe devices connected to the management device, avoiding a coupling issue between the PCIe devices and the servers. Since the management device supplies power to the PCIe device independently, the management device avoids a compatibility issue resulting from the power consumption caused by the server powering the PCIe devices, thereby improving the efficiency of integrating the PCIe devices into the servers.

In a possible implementation, when the PCIe device is running, heat is dissipated from the PCIe device through the heat dissipation module.

In other words, the management device can provide heat dissipation to the running PCIe devices connected to the management device, avoiding the coupling issue between the PCIe devices and the servers. Since the management device supplies power to the PCIe device independently, the management device avoids the compatibility issue resulting from the power consumption or a heat dissipation conflict caused by the heat dissipation from the servers to the PCIe devices, thereby improving the efficiency of integrating the PCIe devices into the servers.

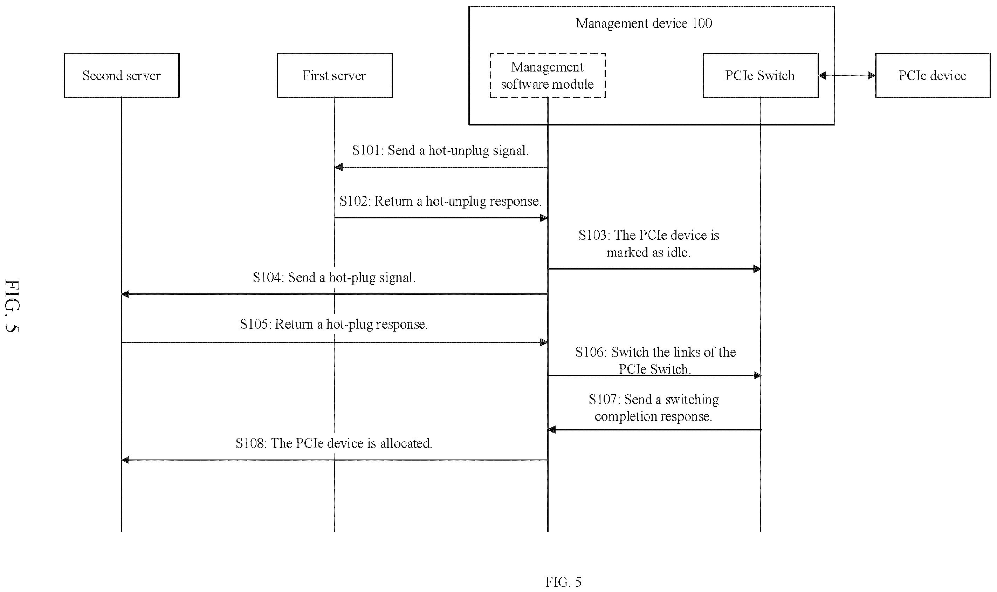

FIG. 5 is a schematic flowchart of a PCIe device allocation process according to the embodiments of the present application. As shown in FIG. 5, the specific steps are as follows.

Step S101: When the first PCIe device is mounted on the first server, the management device 100 can send the hot-unplug signal to the first server through the management software module.

The hot-unplug signal can be configured to notify the second server to perform the hot-unplug operation, and the hot-unplug signal may include the address identifier of the PCIe device.

For example, when the PCIe configuration module contains the correspondence between the first server and the first PCIe device, when the management software module of the management device receives a request from the first server to release the first PCIe device, and this request includes the identifier of the first PCIe device, the management device can generate the hot pull out signal through the hot plug control module through the management software module, and send the hot-unplug signal to the first server through the transfer module.

Step S102: After performing the hot-unplug interaction, the first server can return a hot-unplug response to the management device 100.

The hot-unplug response can be used for notifying the management device that the slot corresponding to the first PCIe device is powered off after the first server's OS releases the first PCIe device.

Step S103: After receiving the hot-unplug response, the management software module of the management device 100 marks the first PCIe device as idle.

In other words, after receiving the hot-unplug response, the management software module can incorporate the first PCIe device to the resource pool for subsequent reallocation to other servers.

Step S104: When the management device 100 determines the second server to which the first PCIe device is to be reallocated, the management device 100 sends a hot-plug signal to the second server.

The hot-plug signal can be configured to notify the second server to perform the hot-plug operation. The hot-plug signal may include the address identifier of the first PCIe device. After receiving the hot-plug signal, the second server processes the hot-plug signal through the OS.

For example, the management device determines the second server to which the first PCIe device is to be allocated according to the user instruction received by the management software module. Alternatively, the management device can determine the second server to which the first PCIe device is to be allocated according to the PCIe device requirement information sent by the server and received by the management device. The PCIe device requirement information may be details such as the type of the PCIe device that the server currently needs to be allocated, and the management device can determine the PCIe device to be allocated to the server based on the requirement information.

Step S105: Respond to the management device 100 with a hot-plug response.

The hot-plug response may include a power-on signal for the corresponding slot. After receiving the hot-plug response, the management device 100 can determine the correspondence based on the address identifier of the PCIe device. The address identifier can be the slot identifier of the PCIe device.

Step S106: Switch the connection links according to the correspondence by using the partitioning function of the PCIe Switch.

Step S107: After the PCIe Switch completes the link switching, send a switching completion response to the management software module.

Step S108: The management software module can allocate the first PCIe device to the second server according to the switched link.

After the link is established, PCIe device allocation and device initialization can be started.

The above mainly introduces the solutions provided by the embodiments of the present application from the perspective of methodology. It is understandable that, to achieve the above functions, the PCIe device management device includes at least one of the hardware structures and/or software modules that perform each function. It should be readily apparent to a person skilled in the art that the units and algorithm steps of the various examples described with the embodiments disclosed herein can be implemented by hardware, or a combination of hardware and computer software. Whether a particular function is executed by hardware or in software driving the hardware depends on a specific application and design constraints of the technical solutions. A skilled artisan can use different methods for each specific application to implement the described functions, but such an implementation should not be considered beyond the scope of the present application.

In the embodiments of the present application, functional units of the PCIe device management device can be divided according to the previous methods. For example, functional units may be divided according to individual functions, or two or more functions may be integrated in one processing unit. The integrated units mentioned previously can be implemented either in the form of hardware or as software functional units. It should be noted that the division of units in the embodiments of the present application is illustrative and represents only one way of logical function division. Other division methods can be used in actual implementation.

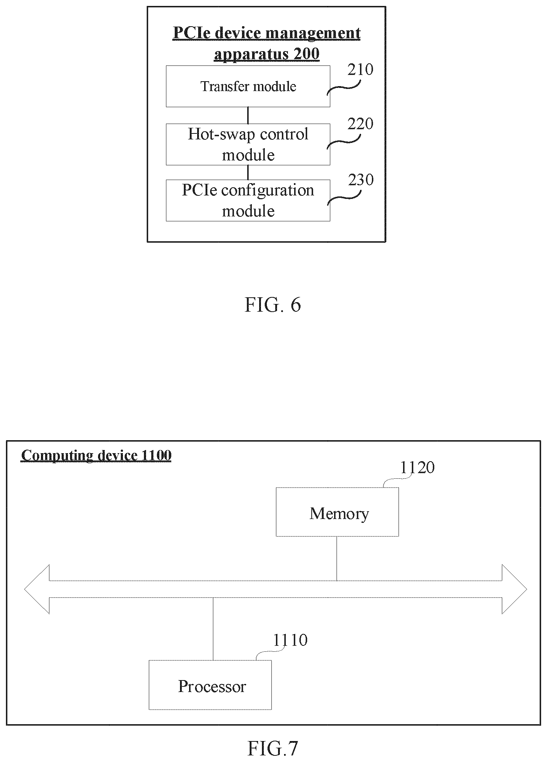

For example, FIG. 6 illustrates a structural diagram of a PCIe device management apparatus 200 according to the embodiments of the present application. The PCIe device management apparatus 200 is applied in the management device, which includes a transfer module 210, a hot-swap control module 220, and a PCIe configuration module 230. The PCIe device management apparatus 200 includes:
The management device is connected to at least one server through the transfer module 210. The transfer module 210 is connected to the hot-swap control module 220, and the hot-swap control module 220 is connected to the PCIe configuration module 230;
The hot-swap control module 220 is configured to receive a resource release instruction or a resource allocation instruction, and based on the resource release instruction or the resource allocation instruction, controls the transfer module 210 and the PCIe configuration module 230. The resource release instruction is configured to instruct to release resources of a PCIe device mounted on a server, and the resource allocation instruction is configured to instruct to mount the PCIe device to a designated server; and
The PCIe configuration module 230 is configured to perform resource release or resource allocation of a PCIe device. The resource release refers to terminating the correspondence between the PCIe device and the server. The resource allocation refers to establishing the correspondence between the PCIe device and the server.

In a possible implementation, the apparatus also includes: the hot-swap control module 220 receiving a resource allocation instruction, and the resource allocation instruction being configured to instruct that the first PCIe device, after resource release, is mounted to the second server. Based on the resource allocation instruction, the hot-swap control module 220 controls the transfer module 210 to perform a hot-plug operation with the second server. The hot-swap control module 220 controls the PCIe configuration module 230 to allocate resources to the first PCIe device, and the resource allocation is configured to represent the establishment of the correspondence between the first PCIe device and the second server.

In a possible implementation, the management device also includes a management software module, and the management device further includes the hot-swap control module 220 notifying the management software module that the first server has completed the hot-unplug operation. The management software module terminates the correspondence between the first PCIe device and the first server in the PCIe configuration module.

In a possible implementation, the PCIe configuration module 230 includes a correspondence between at least one PCIe device connected to the PCIe configuration module 230 and at least one server connected to the transfer module 210.

In a possible implementation, during the hot-unplug interaction of the management device and the second server, a slot of a PCIe device remains powered on.

In a possible implementation, the apparatus also includes:
a power supply module, configured to supply power to the first PCIe device.

In a possible implementation, the apparatus also includes:
a heat dissipation module, configured to dissipate heat from the first PCIe device.

For detailed descriptions of the above optional methods, reference can be made to the embodiments for the methods. The details will not be repeated here. In addition, the above explanations of the PCIe device management apparatus and descriptions of its beneficial effects may refer to the corresponding embodiments for the methods provided above, and will not be repeated here.

For example, as shown in FIG. 1, some or all functions of the transfer module 210, the hot-swap control module 220, and the PCIe configuration module 230 in the PCIe device management apparatus may be implemented by a processor executing program code in FIG. 1.

FIG. 7 illustrates a structural diagram of a computing device 1100 according to the embodiments of the present application. The management device can be the computing device 1100. The computing device 1100 may be an electronic device such as a smartphone, a tablet, an electronic reader, a laptop, or a smart wearable device. The computing device 1100 in the present application may include one or more of the following components: a processor 1110 and a memory 1120.

The processor 1110 may include one or more processor cores. The processor 1110 connects all parts within the terminal via various interfaces and circuits, executes various functions and processes data of the terminal by running or executing instructions, programs, code sets, or instruction sets stored in the memory 1120, and invoking data stored in the memory 1120. Optionally, the processor 1110 may be implemented in at least one of the following hardware forms: digital signal processing (digital signal processing, DSP), field-programmable gate array (field-programmable gate array, FPGA), or programmable logic array (programmable logic array, PLA). The processor 1110 may integrate one or a combination of a central processing unit (Central Processing Unit, CPU), a graphics processing unit (graphics processing unit, GPU), and a modem. The CPU primarily handles the OSs, user interfaces, and applications. The modem is used to handle wireless communication. It is understandable that the modem may also be implemented separately via a communication chip without being integrated into the processor 1110.

The memory 1120 may include random access memory (random access memory, RAM), and/or read-only memory (read-only memory, ROM). Optionally, the memory 1120 includes a non-transitory computer-readable storage medium (non-transitory computer-readable storage medium) . The memory 1120 is configured to store an instruction, a program, code, a code set, or an instruction set. The memory 1120 can include a program storage area and a data storage area. The program storage area may be configured to store an instruction for implementing an OS, an instruction for implementing at least one function (such as a touch function, an audio playback function, an image playback function, etc.), and instructions for implementing the various method embodiments mentioned above, and the like. The OS can be an Android OS (including systems deeply developed based on the Android OS), an IOS developed by Apple (including systems deeply developed based on the IOS system), or other systems. The data storage area may also store data created by the terminal during use (such as phone book data, audio and video data, and chat records).

In addition, the person skilled in the art may understand that the structure of the computing device 1100 illustrated in the above drawings is not intended to limit the computing device 1100. The computing device 1100 may include more or fewer components than those illustrated, or combine certain components, or arrange components differently. For example, the terminal also includes components such as radio frequency circuits, camera modules, sensors, audio circuits, wireless fidelity (wireless fidelity, WiFi) components, power supply units, and bluetooth components, and will not be repeated here.

The embodiments of the present application also provide a computer-readable storage medium that stores at least one computer instruction. The at least one computer instruction is loaded and executed by the processor to implement the PCIe device management methods described in the above embodiments. For an explanation of relevant content in and a description of a beneficial effect of any of the computer-readable storage media provided above, reference can be made to the corresponding aforementioned embodiments. The details will not be repeated here.

The embodiments of the present application also provide a chip. The chip integrates a control circuit and one or a plurality ports for implementing the functions of the PCIe device management apparatus. Optionally, for the functions supported by the chip, reference can be made to the descriptions above. The details will not be repeated here. The person skilled in the art can understand that all or part of the steps in the above embodiments can be accomplished by a program controling relevant hardware. The program can be stored in the computer-readable storage medium. The storage medium may be ROM, RAM, etc. The processing unit or processor may be a CPU, a general-purpose processor, an application specific integrated circuit (application specific integrated circuit, ASIC), a digital signal processor (digital signal processor, DSP), a field programmable gate array (field programmable gate array, FPGA), or other programmable logic devices, transistor logic devices, hardware components, or any combination of them.

The embodiments of the present application also provide a computer program product including an instruction. When running on a computer, the instruction enabled the computer to perform any method in the above embodiments. The computer program product includes one or a plurality of computer instructions. When the computer program instruction is loaded and executed on the computer, the processes or functions of the embodiments of the present application are generated in whole or in part. The computer may be a general-purpose computer, a special-purpose computer, a computer network, or other programmable device. The computer instruction may be stored in the computer-readable storage medium or transmitted from one computer-readable storage medium to another computer-readable storage medium. For example, the computer instruction may be transmitted from a website, computer, server, or data center to another website, computer, server, or data center via wired means (such as a coaxial line, an optical fiber, or a digital subscriber line [digital subscriber line, DSL]), or via wireless means (such as infrared, radio, microwave, etc.). The computer-readable storage medium may be any available medium accessible to the computer, or a data storage device integrating one or a plurality of available media, such as a server or a data center. The available medium may be a magnetic medium (such as a floppy drive, a drive, or a tape), an optical medium (such as a digital video disc [DVD]), or a semiconductor medium (such as a solid state disk [SSD]).

It should be noted that the components provided in the embodiments of the present application for storing the computer instruction or the computer program, such as but not limited to the memory, the computer-readable storage medium, and the communication chip, are all non-transitory. The person skilled in the art should appreciate that, in one or a plurality of the examples described above, the functions described in the embodiments of the present application can be implemented by the hardware, software, firmware, or any combination of them. When implemented by software, these functions can be stored in the computer-readable storage medium or transmitted as one or the plurality of instructions or codes on the computer-readable storage medium. The computer-readable storage medium includes a computer storage medium and communication medium, where communication medium includes any medium that facilitates transmission of the computer program from one place to another. The storage medium can be any available medium accessible via a general-purpose or special-purpose computer.

The above are merely optional embodiments of the present application. The scope of protection of the present application is not limited thereto. Any modifications, equivalent substitution, or improvements made within the spirit and principles of the present application should be covered within the scope of protection of the present application.

## Claims

1. A PCIe device management method, applied to a management device, wherein the management device comprises a transfer module, a hot-swap control module, and a PCIe configuration module, and the method comprises:
receiving, by the hot-swap control module, a resource release instruction, wherein the resource release instruction is configured to instruct to release resources of a first PCIe device mounted on a first server;
based on the resource release instruction, controling, by the hot-swap control module, the transfer module to perform a hot-unplug operation with the first server; and
controling, by the hot-swap control module, the PCIe configuration module to release the resources of the first PCIe device, wherein resource release is configured to represent a termination of a correspondence between the first PCIe device and the first server.

2. The method according to claim 1, wherein after the hot-swap control module controls the PCIe configuration module to release the resources of the first PCIe device, further comprising:
receiving, by the hot-swap control module, a resource allocation instruction, wherein the resource allocation instruction is configured to instruct to mount the first PCIe device to a second server after the resources are released;
based on the resource allocation instruction, controling, by the hot-swap control module, the transfer module and the second server to perform a hot-plug operation; and
controling, by the hot-swap control module, the PCIe configuration module to allocate the resources of the first PCIe device, wherein the resource allocation is used to represent an establishment of a correspondence between the first PCIe device and the second server.

3. The method according to claim 1 or 2, wherein the management device further comprises a management software module, and the hot-swap control module controls the PCIe configuration module to release the resources of the first PCIe device, comprising:
notifying, by the hot-swap control module, the management software module that the first server has completed the hot-unplug operation; and
terminating, by the management software module, the correspondence between the first PCIe device and the first server in the PCIe configuration module.

4. The method according to any one of claims 1 to 3, wherein the PCIe configuration module comprises a correspondence between at least one PCIe device connected to the management device and at least one server connected to the transfer module.

5. The method according to any one of claims 1 to 4, wherein the management device further comprises a power supply module, further comprising:
supplying, by the power supply module, power to the first PCIe device.

6. The method according to any one of claims 1 to 5, wherein the management device further comprises a heat dissipation module, comprising:
dissipating, by the heat dissipation module, heat from the first PCIe device.

7. The method according to any one of claims 1 to 6, wherein in the case that the hot swap control module controls the adapter module and the first server to hot unplug operation, a slot of the first PCIe device remains powered on.

8. A PCIe device management method, applied to a management device, wherein the management device comprises a transfer module, a hot-swap control module, and a PCIe configuration module, and the method comprises:
receiving, by the hot-swap control module, a resource allocation instruction, wherein the resource allocation instruction is configured to instruct to mount a second PCIe device to a second server; and
controling, by the hot-swap control module, the PCIe configuration module to allocate resources of the second PCIe device, wherein the resource allocation is configured to represent an establishment of a correspondence between the second PCIe device and the second server.

9. A management device, comprising a transfer module, a hot-swap control module, and a PCIe configuration module, wherein
the management device is connected to at least one server through the transfer module, wherein the transfer module is connected to the hot-swap control module, and the hot-swap control module is connected to the PCIe configuration module;
the hot-swap control module receives a resource release instruction or a resource allocation instruction, and based on the resource release instruction or the resource allocation instruction, controls the transfer module and the PCIe configuration module, wherein the resource release instruction is configured to instruct to release resources of a PCIe device mounted on a server, and the resource allocation instruction is configured to instruct to mount the PCIe device to a designated server; and
the PCIe configuration module performs resource release or resource allocation of the PCIe device, wherein the resource release refers to terminating a correspondence between the PCIe device and the server, and the resource allocation refers to establishing a correspondence between the PCIe device and the server.

10. A server, connected to at least one PCIe device through the management device described in claim 9.
